# EUROPEAN PATENT APPLICATION

(11) **EP 3 434 159 A1**
(43) Date of publication of application: **30.01.2019**
(21) Application number: 18186168.3
(22) Date of filing: 27.07.2018
(51) Int. Cl.: A47J 31/36, B65D 85/804

(54) **SEALING SYSTEM FOR BEVERAGE CAPSULES AND BEVERAGE EXTRACTION SYSTEM**

(30) Priority: 28.07.2017 ZA 201705131
(71) Applicant: Kay, Anthony, 8005 Cape Town (ZA)
(72) Inventor: Kay, Anthony, 8005 Cape Town (ZA)
(74) Representative: Turner, Craig Robert

(57) **Abstract**

A beverage extraction system including a capsule (42) of aluminium foil which comprises a frustoconical side wall (44), a base wall closing the smaller diameter end of the capsule and a radially outwardly protruding flange (48) encircling the larger diameter end of the capsule. The foil forming the flange is shaped so as to provide a continuous circumferentially extending sealing rib (50) on the flange. The extraction machine of the system has a pressing sleeve the leading end of which is in the form of a notched ring (16). The ring (16) presses on the flange (48) of the capsule (42) during extraction. The diameter of the rib (50) at its apex equals the diameter of the notched ring (16) so that the notched ring (16) encounters and crushes the rib (50) during extraction.

## Description

### FIELD OF THE INVENTION

This invention relates to capsules for containing substances from which beverages can be produced and to a beverage extraction system.

### BACKGROUND TO THE INVENTION

The beverage extraction system which is widely known as the Nespresso (Registered Trade Mark) system uses capsules to contain the substance from which the beverage is to be extracted. The system was introduced initially to enable coffee to be produced. Since then capsules containing substances such as milk powder, hot chocolate and tea have been introduced.

Each capsule has a frustoconical side wall, a transverse base wall at the smaller diameter end of the side wall and an outwardly projecting flange which encircles the side wall at its wider end. The capsule is filled through its wider end and then closed by a foil disc that is adhered to the flange.

The capsules first introduced were manufactured using aluminium foil and these are still in use by the company which innovated this extraction system. Subsequently, capsules of the same shape but injection moulded or thermoformed using synthetic plastics material have been introduced.

The extraction machine which is used with capsules of this type comprises a structure for positioning the capsule in a cavity of the machine. The longitudinal axis of the capsule extends horizontally and the flange lies in a vertical plane. A cylindrical pressing sleeve of the machine, in use, bears on that surface of the flange which faces towards the smaller end of the capsule. The sleeve presses the foil against a profiled back plate. A three sided blade penetrates the capsule through its base wall as the sleeve moves forward to press on the flange, allowing hot water to enter the capsule from the sleeve.

Water is injected into the capsule at a pressure of, for example, 19 Bar. The foil has supported areas which are against raised zones of the back plate and other areas which are unsupported as they span across depressions in the back plate. Water pressure inside the capsule acting on these unsupported areas causes them to burst permitting the extracted beverage to flow out of the capsule through the holes which have been formed in the foil.

It is essential that there is a water tight seal between the leading end of the pressing sleeve of the extraction machine and the flange. If this seal is inadequate, water flows between the leading end of the sleeve and the flange. This can result in the pressure build up required to burst the foil not occurring which means that extraction fails. It can also result, even if the foil fails, in the volume of beverage produced being reduced as water by-passes the capsule and flows into a drip tray.

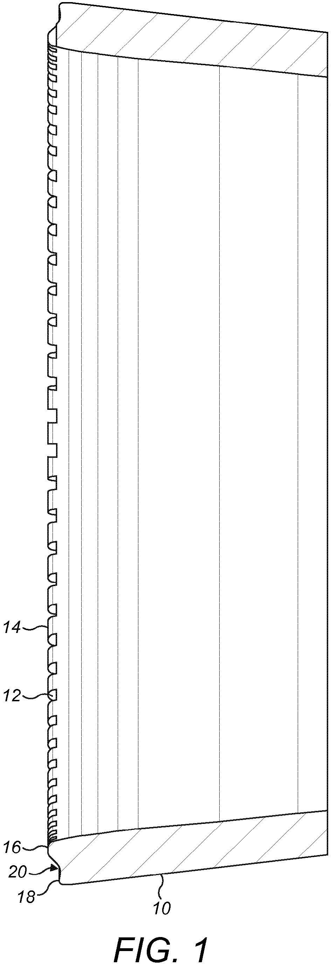

The leading end of the pressing sleeve is illustrated at 10 in Figure 1 and comprises a multitude of radially extending notches 12 with lands 14 between them. If the sleeve is pressed against a hard flat surface, it is the lands which touch the surface. The notches form passageways between the surface and the sleeve. This means that if the flange has a hard flat surface against which the sleeve presses, water leakage between the sleeve and the flange is inevitable.

One solution to the problem is to provide a soft deformable ring on the flange. The ring deforms under the pressure exerted by the sleeve and is squeezed into the notches to seal them. Other proposed solutions to the leakage problem comprise the provision of ribs on the flange. The ribs are of the same material as the capsule, regardless of whether this is foil or synthetic plastics material. The purpose of these ribs is to ensure that a seal is formed between the ribs and the front end of the pressing sleeve.

It will be noted that the front end of the sleeve is profiled so as to provide a radially inner circumferentially extending ring 16 and a radially outer circumferentially extending ring 18 with a circumferentially extending groove 20 between them. The ring 16 is forward of the ring 18, the notches 12 being formed in the ring 16.

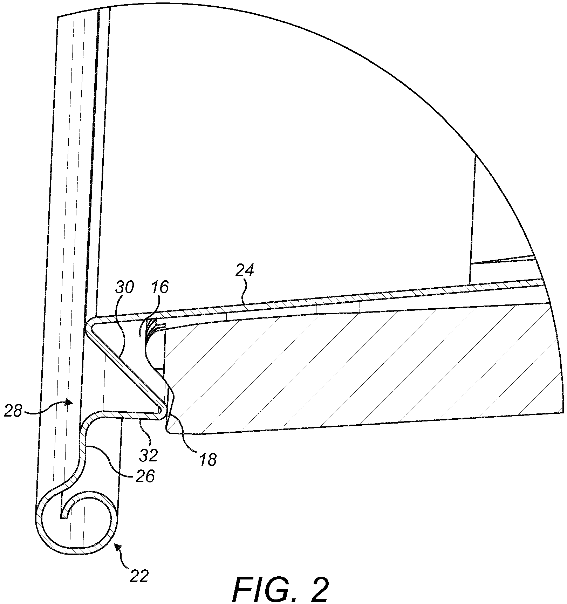

Figure 2 illustrates the relationship between a known aluminium foil capsule 22 and the pressing sleeve 10. It will be noted that the capsule 22 has a frustoconical wall 24 which is a close fit in the bore of the sleeve 10. The flange 26 of the capsule 22 is formed with a continuous circumferentially extending rib 28 which has a skew radially inner flank 30 and a radially outer flank 32 which is at right angles to the plane of the flange 26.

The diameter of the rib 28 where the side wall 24 meets the flank 30 is 29.92mm. The diameter of the apex of the rib 28 is 32.40mm. The diameter of the ring 16 is 30.55mm. The ring 16 is consequently radially inwardly of the apex of the rib 28 and enters the groove bounded by the wall 24 and the flank 30. The outer ring 18 encounters the rib 28. A difficulty with this form is that there are gaps in the ring 18 at one point around its circumference. Unless the rib 28 bridges across these gaps and seals them, leakage through them is inevitable. Also, with motor driven machines the forward motion can cease before the rib 28 has been completely crushed.

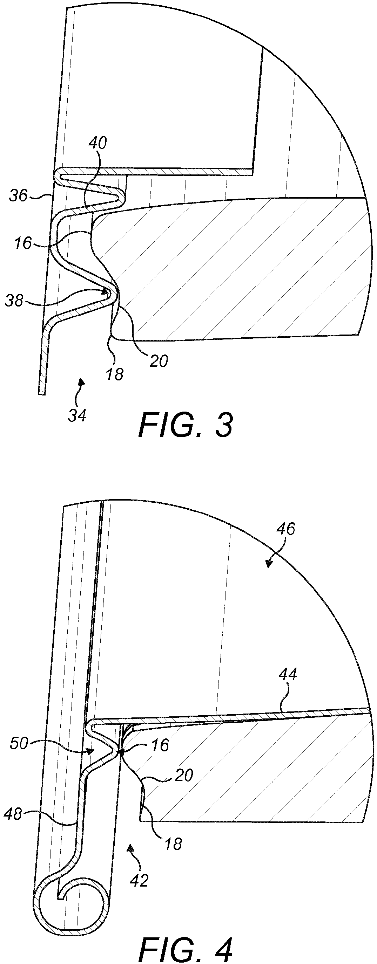

Figure 3 shows a foil capsule 34 which has a radially inner continuous circumferentially extending rib 36 and a radially outer continuous circumferentially extending rib 38. The ribs are of approximately the same vee-section. The conical angle of the inner rib 36 smaller than the conical angle of the outer rib 38. The radially outer flank 40 of the inner rib 36 contacts the inside surface of the inner ring 16 and the rib 38 enters the groove 20. The intention is that two circumferentially extending sealing zones are produced. It is possible that the sleeve 10 does not advance far enough to crush the rib 38 which means that an inadequate seal is formed between the apex of the rib 38 and the groove 20.

The diameter at the apex of the rib 36 is 29.48mm and the diameter at the apex of the rib 38 is 31.94mm. From this it will be understood that the ring 16 lies between the ribs 36 and 38 during extraction.

The present invention provides an aluminium foil capsule which seals in a more consistent and reliable manner than the capsules illustrated in Figures 2 and 3.

### BRIEF DESCRIPTION OF THE INVENTION

According to one aspect of the present invention there is provided a capsule of aluminium foil for use with an extraction machine having a pressing sleeve the leading end of which is in the form of a notched ring, the capsule comprising a frustoconical side wall, a base wall closing the smaller diameter end of the capsule and a radially outwardly protruding flange encircling the larger diameter end of the capsule, the foil forming the flange being shaped to provide a continuous circumferentially extending sealing rib, the diameter of the rib at its apex equaling the diameter of the notched ring at the leading end of the pressing sleeve.

According to a further aspect of the present invention there is provided a beverage extraction system comprising;
a capsule of aluminium foil which comprises a frustoconical side wall, a base wall closing the smaller diameter end of the capsule and a radially outwardly protruding flange encircling the larger diameter end of the capsule, the foil forming the flange being shaped to provide a continuous circumferentially extending sealing rib on the flange and;
an extraction machine having a pressing sleeve the leading end of which is in the form of a notched ring which presses on said flange of the capsule during extraction, the diameter of said rib at its apex equaling the diameter of said notched ring so that said notched ring engages and crushes said rib during extraction.

The diameter of said rib at its apex is 30.55 mm to match the diameter of the notched ring.

### BRIEF DESCRIPTION OF FIGURE 4

For a better understanding of the present invention, and to show how the same may be carried into effect, reference will now be made, by way of example, to Figure 4 of the accompanying drawings which illustrates part of a foil capsule in accordance with the present invention.

### DETAILED DESCRIPTION OF THE DRAWINGS

The capsule illustrated in Figure 4 is designated 42 and is fabricated from aluminium foil. It is pressed to the requisite shape and comprises a frustoconical side wall 44 bounding a space 46 which receives the product from which the beverage is to be made.

A radially outwardly extending flange 48 encircles the side wall 44 at its larger diameter end. The capsule is filled through the larger diameter end and then sealed closed by an aluminium foil disc which is secured to the surface of the flange 48 which faces away from the smaller diameter end of the capsule.

The flange includes a circumferentially extending continuous rib 50 which stands proud of the under surface of the flange 48, that is, proud of the surface which faces towards the smaller diameter end of the capsule. The diameter of the rib 50 is 30.55mm which is exactly the same as the diameter of the circumferentially inner ring 16 of the sleeve 10. When the sleeve 10 moves forward as a preliminary to extraction taking place, the notched ring 16 encounters the rib 50 and crushes it so that it takes up the castellated shape of the ring 16 and seals between the ring 16 and the capsule flange 48.

## Claims

1. A capsule of aluminium foil for use with an extraction machine having a pressing sleeve the leading end of which is in the form of a notched ring, the capsule comprising a frustoconical side wall, a base wall closing the smaller diameter end of the capsule and a radially outwardly protruding flange encircling the larger diameter end of the capsule, the foil forming the flange being shaped to provide a continuous circumferentially extending sealing rib, the diameter of the rib at its apex equaling the diameter of the notched ring at the leading end of the pressing sleeve.

2. A capsule as claimed in claim 1, wherein the diameter of said rib at its apex is 30.55mm.

3. A beverage extraction system comprising:-
a capsule of aluminium foil which comprises a frustoconical side wall, a base wall closing the smaller diameter end of the capsule and a radially outwardly protruding flange encircling the larger diameter end of the capsule, the foil forming the flange being shaped to provide a continuous circumferentially extending sealing rib on the flange and;
an extraction machine having a pressing sleeve the leading end of which is in the form of a notched ring which presses on said flange of the capsule during extraction, the diameter of said rib at its apex equaling the diameter of said notched ring so that said notched ring engages and crushes said rib during extraction.

4. A system as claimed in claim 3, wherein the diameter of said rib at its apex is 30.55mm.
